# FASCICULE DE BREVET EUROPEEN

(11) **EP 2 514 639 B1**
(45) Date de publication et mention de la délivrance du brevet: **04.11.2015**
(21) Numéro de dépôt: 12164787.9
(22) Date de dépôt: 19.04.2012
(51) Int. Cl.: B60R 13/02, B60R 21/213, B60R 21/216, F16B 5/06

(54) **Ensemble pour la retenue d'un élément de garniture à un élément de carrosserie d'un véhicule**
Einheit zum Blockieren eines Dichtungselements auf einem Karosserieelement eines Fahrzeugs
Assembly for retaining a trim element on a body part of a vehicle

(30) Priorité: 21.04.2011 FR 1153482
(43) Date de publication de la demande: 24.10.2012
(73) Titulaire: MECAPLAST France, 92 140 Clamart (FR)
(72) Inventeur: Claverie, Aurore, 06240 BEAUSOLEIL (FR); Bollier, François, 06300 NICE (FR); Bacelos, François, 06300 NICE (FR)
(74) Mandataire: Delorme, Nicolas

(56) Documents cités:
- EP-A1- 1 769 979
- EP-B1- 1 432 598
- WO-A1-2008/032159

## Description

L'invention concerne un ensemble pour la retenue d'un élément de garniture à un élément de carrosserie d'un véhicule lors d'un déploiement d'un coussin gonflable de sécurité interposé entre les éléments de garniture et de carrosserie.

L'invention concerne également un véhicule équipé de cet ensemble. Un coussin gonflable de sécurité, ou airbag, est une enveloppe flexible au sein de laquelle est injecté un gaz par réaction chimique explosive, pour la gonfler. Les coussins gonflables de sécurité sont en particulier utilisés dans le domaine de l'automobile pour protéger les occupants d'un véhicule lors d'une collision.

Dans le cas d'un coussin gonflable de sécurité latéral de type rideau, le coussin est interposé entre un élément de carrosserie du véhicule formant un côté de caisse et un élément de garniture du véhicule monté sur cet élément de carrosserie.

Lors de la détection d'une collision, le coussin se gonfle par injection de gaz au sein de celui-ci. Dans certains cas, le coussin se déploie et sollicite fortement l'élément de garniture qui va se déformer et peut se détacher de l'élément de carrosserie dans l'habitacle. Afin que l'élément de garniture ne constitue pas un projectile pouvant blesser l'un des occupants du véhicule, il est nécessaire de retenir l'élément de garniture à l'élément de carrosserie tout en permettant le déploiement du coussin gonflable.

Le document EP1432598 décrit un ensemble, selon le préambule de la revendication 1, pour la retenue d'un élément de garniture à un élément de carrosserie d'un véhicule lors d'un déploiement d'un coussin gonflable de sécurité interposé entre ces éléments.

L'ensemble comporte un porte-agrafe monté sur un élément de garniture du véhicule. Le porte-agrafe est constitué d'une pluralité de parois délimitant une cavité, une paroi étant pourvue d'un orifice d'encliquetage. L'ensemble comporte en outre un dispositif de retenue monté sur ce porte-agrafe. Le dispositif de retenue comprend:
- une agrafe présentant une tête conformée pour s'encliqueter sur l'élément de carrosserie du véhicule, et une base conformée pour s'encliqueter dans l'orifice d'encliquetage du porte-agrafe ; et
- une portion de raccordement, réalisée en une résine synthétique, dont une extrémité est raccordée à l'agrafe et dont l'extrémité opposée forme un organe d'ancrage.

Lorsque le coussin n'est pas déployé, la base de l'agrafe est encliquetée dans l'orifice d'encliquetage du porte-agrafe, tandis que la portion de raccordement et l'organe d'ancrage sont logés au sein de la cavité du porte-agrafe.

Lorsque le coussin est déployé, l'agrafe est désencliquetée de l'orifice d'encliquetage et l'organe d'ancrage prend appui contre le pourtour de l'orifice d'encliquetage pour retenir l'élément de garniture à l'élément de carrosserie par le biais du porte-agrafe.

Un inconvénient de l'ensemble décrit dans le document précité est que la portion de raccordement est réalisée en une résine synthétique et manque de flexibilité. Dans ces conditions, le volume de la cavité du porte-agrafe nécessaire pour loger la portion de raccordement lorsque le coussin n'est pas déployé, est considérable, et par la même l'encombrement du porte-agrafe est important.

En outre, il existe dans l'état de la technique des coussins gonflables de volumes distincts prévus pour équiper des véhicules distincts. En fonction du volume du coussin gonflable, il peut être nécessaire d'associer un dispositif de retenue présentant une portion de raccordement d'une longueur telle qu'elle permette le déploiement de ce coussin gonflable dans l'habitacle.

Un inconvénient du dispositif de retenue décrit dans le document EP1432598 est que la portion de raccordement vient de moulage avec l'agrafe, et l'organe d'ancrage. Le fabricant doit en conséquence disposer de moules distincts pour fabriquer des dispositifs de retenue présentant des portions de raccordement de longueurs distinctes.

De tels moules étant onéreux, les investissements à la charge du fabricant sont élevés, et par suite le coût de fabrication des dispositifs de retenue est accru.

Le but de l'invention est de fournir un ensemble dans lequel le porte-agrafe présente un encombrement réduit. L'invention concerne un ensemble pour la retenue d'un élément de garniture à un élément de carrosserie d'un véhicule lors d'un déploiement d'un coussin gonflable de sécurité interposé entre les éléments de garniture et de carrosserie, **caractérisé en ce que** l'ensemble comporte :
- un porte-agrafe destiné à être lié à l'élément de garniture, comprenant au moins une paroi pourvue d'un orifice d'encliquetage;
- un dispositif de retenue monté sur le porte-agrafe comprenant :
   - une agrafe présentant une tête conformée pour s'encliqueter sur l'élément de carrosserie du véhicule, et une base conformée pour s'encliqueter dans l'orifice d'encliquetage du porte-agrafe ; et
   - un cordon textile souple raccordant l'agrafe à un organe d'ancrage;
le dispositif étant déplaçable entre une position de repos, dans laquelle la base de l'agrafe est encliquetée sur l'orifice d'encliquetage du porte-agrafe, et une position de retenue dans laquelle la base de l'agrafe est désencliquetée de l'orifice d'encliquetage et l'organe d'ancrage prend appui contre le pourtour de l'orifice d'encliquetage pour retenir l'élément de garniture à l'élément de carrosserie par le biais du porte-agrafe et du cordon.

Par « cordon textile souple » on entend tout assemblage de fils, de filins, tressés ensembles.

L'utilisation d'un cordon pour raccorder l'agrafe à l'organe d'ancrage est avantageuse en ce qu'un cordon est apte à se positionner au besoin, dans toutes les directions de l'espace, au contraire d'un élément réalisé en une résine synthétique, tel que dans l'état de l'art.

Dans ces conditions, il est possible de réaliser des porte-agrafes de géométries variables, et notamment des porte-agrafes dont la hauteur est inférieure à la longueur du cordon. Il est alors possible de réaliser des porte-agrafes de faible encombrement, et de réduire la distance séparant l'élément de carrosserie de l'élément de garniture. Ainsi, l'impact visuel de l'élément de garniture est minimisé et la visibilité du conducteur est améliorée.

Avantageusement, l'agrafe et l'organe d'ancrage sont surmoulés sur le cordon textile. Dans ces conditions, il est possible de réaliser, à partir d'un unique moule, des dispositifs de retenue présentant des cordons de longueurs distinctes.

En effet, ce n'est plus la géométrie du moule qui détermine la longueur du cordon. C'est la quantité de cordon déroulé entre deux surmoulages d'une agrafe et d'un organe d'ancrage qui détermine la longueur du cordon.

En conséquence, en ne disposant que d'un unique moule, et en ajustant la quantité de cordon déroulé, le fabricant peut réaliser une pluralité de dispositifs de retenue. Ainsi, les investissements à la charge du fabricant sont minimisés.

L'invention peut comporter une ou plusieurs des caractéristiques suivantes.

Avantageusement, l'organe d'ancrage est conformé de sorte que :
- orienté dans une première orientation celui-ci est apte à être introduit à travers l'orifice d'encliquetage du porte-agrafe, pour permettre le montage du dispositif en position de repos; et
- orienté dans une seconde orientation celui-ci est inapte à traverser l'orifice d'encliquetage du porte-agrafe, pour que l'organe d'ancrage prenne appui contre le pourtour de l'orifice d'encliquetage et retienne l'élément de garniture à l'élément de carrosserie par le biais du porte-agrafe.

Dans ces conditions, le montage du dispositif de retenue sur le porte-agrafe est facilité, tout en conservant la fonction d'ancrage de l'organe.

Dans une forme d'exécution, l'organe d'ancrage présente une forme arquée.

Avantageusement, une extrémité distale de cet organe d'ancrage est effilée.

Une telle conformation est avantageuse en ce qu'elle facilite l'introduction de l'organe d'ancrage à travers l'orifice d'encliquetage à la manière d'une aiguille dans une première orientation, tout en permettant à l'élément d'ancrage de retenir l'élément de garniture à l'élément de carrosserie par le biais du porte-agrafe dans une seconde orientation.

L'organe d'ancrage est dimensionné pour réduire l'encombrement lors du montage tout en ayant une forte tenue lors du déploiement airbag

Avantageusement, le porte-agrafe comprend des moyens de fixation adaptés pour fixer l'organe d'ancrage sans aucun degré de liberté lorsque le dispositif de retenue est en position de repos, et pour permettre la libération de l'organe d'ancrage lors du passage du dispositif de sa position de repos à sa position de retenue.

Il est envisagé que les moyens de fixation présentent un logement conformé de sorte qu'au moins une portion de l'organe d'ancrage soit apte à être encastrée dans celui-ci.

Il est également envisagé que les moyens de fixation soient disposés à l'intérieur d'un volume intérieur délimité par des parois du porte-agrafe.

De préférence, les moyens de fixation sont conçus pour libérer l'organe d'ancrage lors du passage du dispositif de retenue de sa position de repos à sa position de retenue.

Dans une forme d'exécution, le porte-agrafe présente la forme d'un pont et l'organe d'ancrage est déporté hors d'un volume intérieur délimité par des parois du porte-agrafe lorsque le dispositif est en position de repos.

Cette disposition s'avère avantageuse car elle permet d'offrir un ensemble de retenue particulièrement compact.

Il est envisagé que l'agrafe et/ou l'organe d'ancrage soient réalisés en une matière plastique telle que du polyamide.

Dans la forme d'exécution préférée, le cordon comprend des fibres en polyester.

L'invention concerne également un véhicule, **caractérisé en ce qu'**il comporte :
- un élément de garniture ;
- un élément de carrosserie ; et
- un ensemble tel que présenté plus haut.

Dans la forme d'exécution préférée de ce véhicule l'élément de garniture et le porte-agrafe sont monoblocs.

Typiquement, l'élément de garniture et le porte-agrafe sont réalisés par moulage. L'invention sera mieux comprise à la lecture de la description qui va suivre, donnée uniquement à titre d'exemple non limitatif et faite en se référant aux dessins sur lesquels :
- la figure 1 est une illustration schématique partielle d'un véhicule équipé d'un ensemble selon l'invention ;
- la figure 2 est une vue en perspective de l'ensemble de retenue ;
- la figure 3 est une vue de côté de l'ensemble de la figure 2 dans lequel un dispositif de retenue équipant cet ensemble est dans une position de repos ;
- la figure 4 est une vue de côté de l'ensemble de la figure 2 dans lequel le dispositif de retenue est dans une position de retenue ;
- la figure 5 est en vue de côté du dispositif de retenue des figures 3 et 4 ;
- la figure 6 est une vue en perspective d'une première variante de l'ensemble de retenue de la figure 2 ; et
- la figure 7 est une vue en perspective d'une seconde variante de l'ensemble de retenue de la figure 2.

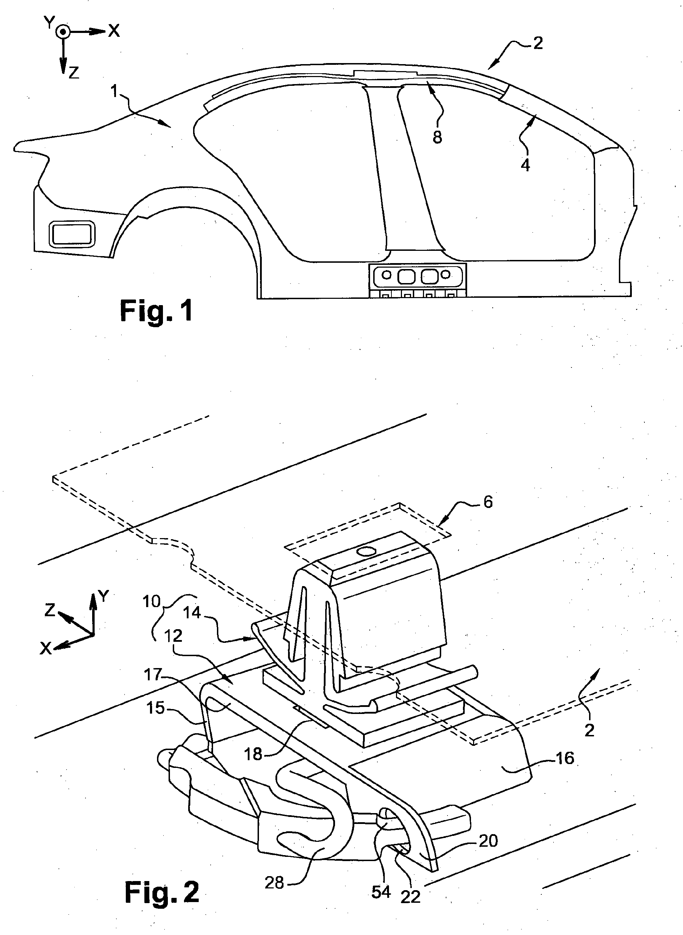

Les figures 1 à 7 sont orientées dans un même référentiel orthogonal lié au véhicule et formé par des directions x, y et z.

Dans cette description, les termes « avant » , « arrière », « inférieur », et « supérieur » sont utilisés en référence à une position de fonctionnement du véhicule.

La figure 1 illustre un véhicule 1 automobile selon l'invention. Le véhicule 1 comprend un élément de carrosserie 2 formant un côté de caisse. Le véhicule 1 comprend également un élément de garniture 4 monté sur l'élément de carrosserie 2 et tourné vers l'habitacle du véhicule 1.

L'élément de carrosserie 2 est pourvu d'un orifice d'encliquetage 6 (illustré sur les figures 2, 3, et 4).

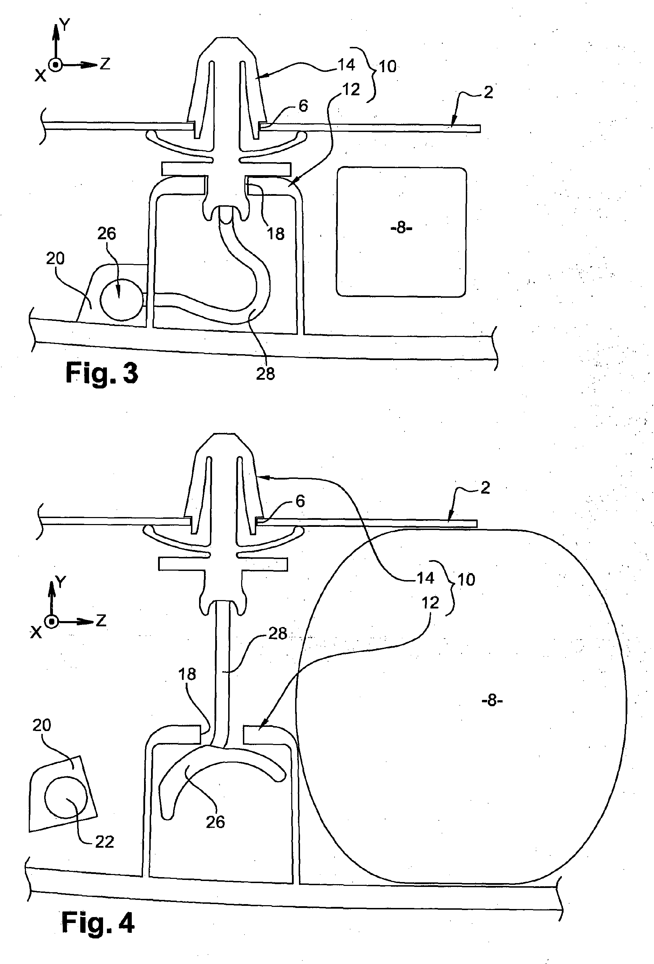

Le véhicule 1 comprend un coussin gonflable de sécurité 8. Le coussin 8 est disposé entre l'élément de carrosserie 2 et l'élément de garniture 4, et est par exemple fixé sur l'élément de carrosserie 2. Le coussin 8 est déployable entre un état non déployé (illustré sur la figure 3) et un état déployé (illustré sur les figures 1 et 4).

De façon connue en soi, le véhicule 1 comprend des moyens de détection d'une collision du véhicule 1 et des moyens de gonflage du coussin 8 (non illustrés).

Le véhicule 1 est équipé d'un ensemble 10 (illustré sur les figures 2, 3, et 4) pour la retenue de l'élément de garniture 4 à l'élément de carrosserie 2 lors du déploiement du coussin 8.

L'ensemble 10 comporte un porte-agrafe 12 et un dispositif de retenue 14 monté sur ce porte-agrafe 12.

Le porte-agrafe 12 présente la forme d'un pont. Celui-ci comprend des parois latérales 15, 16 et une paroi frontale 17 montée sur les parois latérales 15, 16. La paroi frontale 17 est pourvue d'un orifice d'encliquetage 18. Ici, l'orifice 18 d'encliquetage est rectangulaire et s'étend majoritairement selon la direction x.

Le porte-agrafe 12 peut comprendre en outre une aile 20 raccordée à la paroi 16 et pourvue d'un ajour 22 pour accueillir un organe d'ancrage.

Dans la forme d'exécution représentée, le porte-agrafe 12 et l'élément de garniture 4 sont fabriqués d'un seul tenant par moulage. Le porte-agrafe 12 et l'élément de garniture 4 sont donc monoblocs.

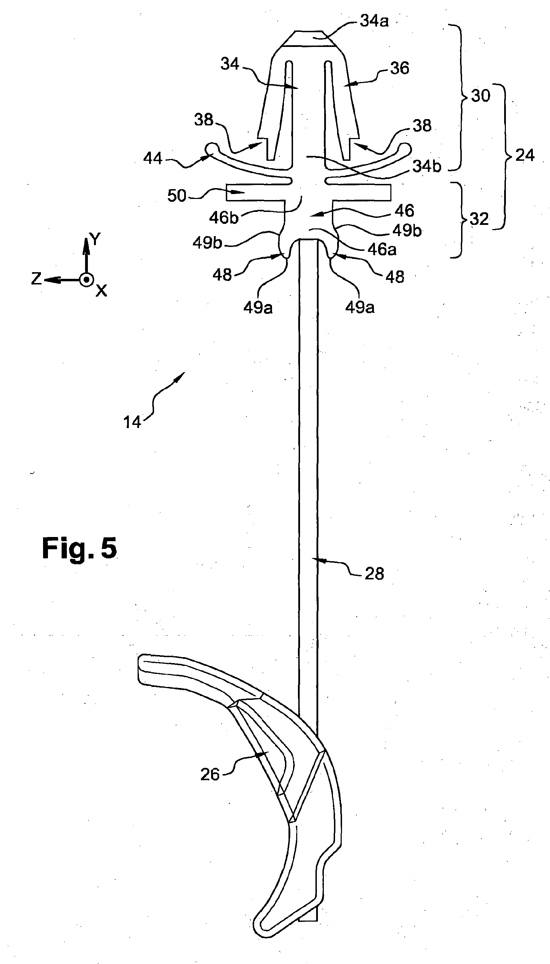

Le dispositif 14 (plus visible sur la figure 5) est constitué d'une agrafe 24, d'une ancre 26, et d'un cordon 28 souple raccordant l'agrafe 24 à l'ancre 26.

L'agrafe 24 est constituée de :
- une tête 30 conformée pour s'encliqueter dans l'orifice d'encliquetage 6 de l'élément de carrosserie 2, et
- une base 32 conformée pour s'encliqueter dans l'orifice d'encliquetage 18 du porte-agrafe 12.

Dans la forme d'exécution représentée, la tête 30 comprend un tronc 34 s'étendant parallèlement à la direction y, conformé pour recevoir en son sein le cordon 28. Le tronc 34 présente une extrémité proximale 34a et une extrémité distale 34b.

La tête 30 comprend deux pattes 36 conformées pour se déformer élastiquement autour d'axes de pivotement parallèles à la direction x. Les pattes 36 s'étendent sensiblement parallèlement aux directions x, et y. Les extrémités proximales des pattes 36 sont mécaniquement raccordées à l'extrémité proximale 34a. Les extrémités distales des lames 36 sont tournées vers l'extrémité proximale 34b. Les extrémités distales des lames 36 forment des épaulements 38.

La tête 30 comprend en outre deux lames 44 conformées pour se déformer élastiquement autour d'axes de pivotement parallèles à la direction x. Les lames 44 sont courbées. Celles-ci s'étendent depuis l'extrémité proximale 34b et sont tournées vers l'extrémité distale 34a.

Ainsi, lorsque la tête 30 est encliquetée dans l'orifice 6, les épaulements 38 prennent appui contre le pourtour de l'orifice 6 et l'élément de carrosserie 2 est pincé entre les extrémités distales des pattes 36 et des lames 44.

La présence des lames 44 est avantageuse en ce qu'elles permettent à la tête 30 de s'encliqueter sur des éléments de carrosserie présentant des épaisseurs distinctes.

La base 32 comprend un tronc 46. Le tronc 46 possède une extrémité proximale 46b raccordée à l'extrémité proximale 34b du tronc 34, et une extrémité distale 46a raccordée au cordon 28.

La base 32 comprend deux lèvres 48 s'étendant depuis l'extrémité distale 46a et tournée vers l'ancre 26. Les lèvres 48 présentent des pentes 49a permettant l'encliquetage de la base 32 dans l'orifice d'encliquetage 18, et des pentes 49b permettant le désencliquetage de la base 32 de l'orifice d'encliquetage 18. Ces lèvres 48 forment une portion de cylindre creux permettant au cordon 28 de s'étendre parallèlement à la direction x lorsque le dispositif est en position de repos. Dans ces conditions, la distance séparant la base 32 de l'élément de garniture peut être minimisée.

La base 32 comprend en outre deux ailes 50 parallélépipédiques s'étendant de part et d'autre du tronc 46, parallèlement aux directions x et z, permettant le maintien de l'agrafe dans la direction y lorsque le dispositif est en position de repos.

Ainsi conformée, lorsque la base 32 est encliquetée dans l'orifice 18, la paroi frontale 17 est disposée entre les lèvres 48 et les ailes 50.

Le cordon 28 est ici réalisé à partir d'une pluralité de fibres en matière textile tressées les unes avec les autres. Ces fibres en matière textile possèdent une forte résistance à la traction de manière à ne pas rompre lors du déplacement du dispositif de retenue de sa position de repos à sa position de retenue.

De préférence, le cordon 28 est réalisé à partir de fibres en polyester.

L'ancre 26 présente une forme arquée ou autrement dit en « croissant de lune ». L'extrémité proximale de l'ancre 26 est mécaniquement raccordée au cordon 28, par exemple par surmoulage. L'extrémité distale de l'ancre 26 est effilée. La section transversale de l'extrémité distale est sensiblement identique à la section transversale de l'ajour 22 de sorte que l'ancre 26 puisse être encastrée à travers cet ajour 22.

L'ancre 26 est dimensionnée de sorte que :
- lorsqu'elle est orientée dans une première orientation (dans un plan parallèle aux directions x et y), celle-ci est apte à traverser, à la manière d'un aiguille, l'orifice d'encliquetage 18; et
- lorsqu'elle est orientée dans une seconde orientation (dans un plan parallèle aux directions y et z), celle-ci est inapte à traverser l'orifice d'encliquetage 18.

De préférence, l'agrafe 24 et l'ancre 26 sont réalisées en une matière plastique, telle que du polyamide. L'agrafe 24 et l'ancre 26 sont ici surmoulées à chacune des extrémités du cordon 28.

Le fonctionnement de l'ensemble 10 va maintenant être décrit.

Dans un premier temps, le dispositif 14 est monté sur l'élément de garniture 4.

A cet effet, l'ancre 26 est tout d'abord orientée selon sa première orientation, et introduit dans l'orifice 18, à la manière d'une aiguille. L'ancre 26 puis le cordon 28 sont enfilés à travers l'orifice 18 jusqu'à ce que la base 32 soit disposée au voisinage de l'orifice 18. La base 32 est alors encliquetée sur le porte-agrafe 12.

Une fois la base 32 encliquetée, l'ancre 26 est déportée hors d'un volume intérieur délimité par les parois 15, 16, et 17 du porte-agrafe 12 et une portion 54 de l'ancre 26 est montée en force dans l'ajour 22. Dans ces conditions, la portion 54 est encastrée dans l'ajour 22 et l'ancre 26 est fixée sans aucun degré de liberté à l'élément de garniture 4 (illustré sur la figure 2).

Dans un second temps, le coussin 8 est fixé à l'élément de carrosserie 2.

Dans un troisième temps, l'élément de garniture 4 est monté sur l'élément de carrosserie 2. A cet effet, la tête 30 est introduite à travers l'orifice 6 puis encliquetée dans cet orifice 6. Le dispositif 14 se trouve alors en position de repos (illustrée sur la figure 3).

Lorsque les moyens de détection du véhicule 1 détectent une collision, les moyens de gonflement gonflent le coussin 8. En réponse, le coussin 8 exerce une pression sur l'élément de garniture 4 entraînant le désencliquetage de la base 32 du porte-agrafe 12.

A mesure que le volume occupé par le coussin 8 se gonfle, la largeur de l'interstice entre l'élément de garniture 4 et de l'élément de carrosserie 2 croît, entraînant le défilement du cordon 28 à travers l'orifice 18. Le cordon 28 exerce une force de traction sur l'ancre 26. Lorsque celle-ci dépasse une force de traction prédéterminée, l'aile 20 rompt entraînant la libération de l'ancre 26.

En retour, le défilement du cordon 28 à travers l'orifice 18 se poursuit jusqu'à ce que l'ancre 26 prenne appui contre le pourtour de l'orifice 18. L'ancre 26 assure alors la retenue de l'élément de garniture 4 à l'élément de carrosserie 2. Le dispositif 14 est alors en position de retenue (illustrée sur la figure 4).L'invention ne se limite pas à la seule forme d'exécution de l'ensemble décrit ci-avant à titre d'exemple, elle en embrasse au contraire toutes les variantes de réalisation.

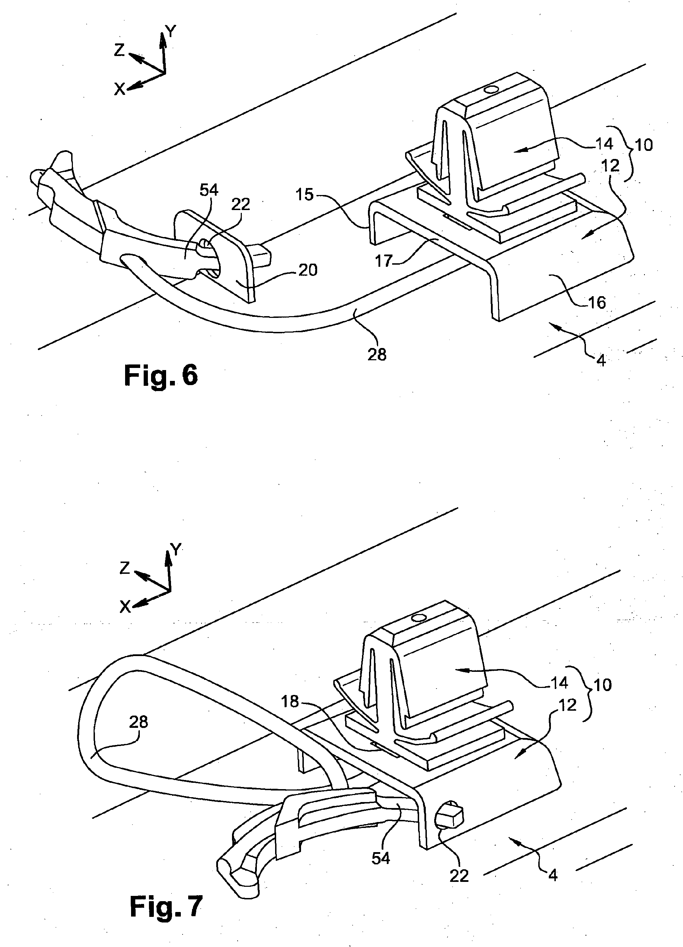

Par exemple, dans une variante illustrée à la figure 6, l'aile 20 n'est pas directement raccordée à la paroi 16. Celle-ci peut être montée sur l'élément de garniture 4 distante par rapport aux parois 15, 16, et 17.

Dans une autre variante illustrée la figure 7, l'aile 20 est omise et l'ajour 22 est ménagé dans une des parois du porte-agrafe 12, par exemple dans la paroi 16.

Dans une autre variante non illustrée, les moyens de fixation de l'ancre 26 sont disposés à l'intérieur du volume intérieur délimité par les parois 15, 16 et 17.

## Revendications

1. Ensemble (10) pour la retenue d'un élément de garniture (4) à un élément de carrosserie (2) d'un véhicule (1) lors d'un déploiement d'un coussin (8) gonflable de sécurité interposé entre les éléments de garniture (4) et de carrosserie (2), l'ensemble (10) comportant:
- un porte-agrafe (12) destiné à être lié à l'élément de garniture (4), comprenant au moins une paroi (17) pourvue d'un orifice d'encliquetage (18) ;
- un dispositif (14) de retenue monté sur le porte-agrafe comprenant :
une agrafe (24) présentant une tête (30) conformée pour s'encliqueter sur l'élément de carrosserie (2) du véhicule (1), et une base (32) conformée pour s'encliqueter dans l'orifice d'encliquetage (18) du porte-agrafe (12);
le dispositif (14) étant déplaçable entre une position de repos, dans laquelle la base (32) de l'agrafe (24) est encliquetée sur l'orifice d'encliquetage (18) du porte-agrafe (12), et une position de retenue dans laquelle la base (32) de l'agrafe (24) est désencliquetée de l'orifice d'encliquetage (18) et l'organe d'ancrage prend appui contre le pourtour de l'orifice d'encliquetage (18) pour retenir l'élément de garniture (4) à l'élément de carrosserie (2) par le biais du porte-agrafe (12) et du cordon (28) ; **caractérisé en ce que** un cordon (28) textile souple du dispositif de retenue raccorde l'agrafe (24) à un organe d'ancrage; l'organe d'ancrage étant conformé de sorte que :
- orienté dans une première orientation celui-ci est apte à être introduit à travers l'orifice d'encliquetage (18) du porte-agrafe (12), pour permettre le montage du dispositif (14) en position de repos; et
- orienté dans une seconde orientation celui-ci est inapte à traverser l'orifice d'encliquetage (18) du porte-agrafe (12), pour que l'organe d'ancrage prenne appui contre le pourtour de l'orifice d'encliquetage (18) et retienne l'élément de garniture (4) à l'élément de carrosserie par le biais du porte-agrafe (12) ;
le porte-agrafe (12) comprenant des moyens de fixation adaptés pour fixer l'organe d'ancrage sans aucun degré de liberté lorsque le dispositif de retenue est en position de repos, et pour permettre la libération de l'organe d'ancrage lors du passage du dispositif de sa position de repos à sa position de retenue.

2. Ensemble (10) selon la revendication précédente, dans lequel l'organe d'ancrage présente une forme arquée.

3. Ensemble (10) selon la revendication 2, dans lequel une extrémité distale de cet organe d'ancrage est effilée.

4. Ensemble (10) selon l'une des revendications 1 à 3, dans lequel les moyens de fixation présentent un logement conformé de sorte qu'au moins une portion de l'organe d'ancrage soit apte à être encastrée dans celui-ci.

5. Ensemble (10) selon l'une quelconque des revendications 1 à 4, dans lequel les moyens de fixation sont disposés à l'intérieur d'un volume intérieur délimité par des parois (15, 16, 17) du porte-agrafe (12).

6. Ensemble (10) selon l'une quelconque des revendications 1 à 5, dans lequel les moyens de fixation sont conçus pour libérer l'organe d'ancrage lors du passage du dispositif (14) de retenue de sa position de repos à sa position de retenue.

7. Ensemble (10) selon l'une quelconque des revendications précédentes, dans lequel le porte-agrafe (12) présente la forme d'un pont et l'organe d'ancrage est déporté hors d'un volume intérieur délimité par des parois (15, 16, 17) du porte-agrafe (12) lorsque le dispositif (14) est en position de repos.

8. Ensemble (10) selon l'une quelconque des revendications précédentes, dans lequel l'agrafe (24) et/ou l'organe d'ancrage sont réalisés en une matière plastique telle que du polyamide.

9. Ensemble (10) selon l'une quelconque des revendications précédentes, dans lequel le cordon (28) comprend des fibres en polyester.

10. Ensemble (10) selon l'une quelconque des revendications précédentes, dans lequel l'agrafe et/ou l'organe d'ancrage sont surmoulés sur le cordon.

11. Véhicule (1), **caractérisé en ce qu'**il comporte :
- un élément de garniture (4);
- un élément de carrosserie (2); et
- un ensemble (10) selon l'une quelconque des revendications précédentes.

12. Véhicule (1) selon la revendication 11, dans lequel l'élément de garniture (4) et le porte-agrafe (12) sont monoblocs.

## Patentansprüche

1. Einheit (10) zum Halten eines Verkleidungselements (4) an einem Karosserieelement (2) eines Fahrzeugs (1) bei einem Auslösen eines Sicherheits-Airbags (8), der zwischen den Verkleidungselementen (4) und Karosserieelementen (2) eingefügt ist, wobei die Einheit (10) folgendes umfasst:
- eine Cliphalterung (12), die dazu bestimmt ist, mit dem Verkleidungselement (4) verbunden zu werden, zumindest eine Wand (17) umfassend, die mit einer Einrastöffnung (18) versehen ist;
- eine Haltevorrichtung (14), die auf der Cliphalterung montiert ist, und folgendes umfasst:
einen Clip (24), der einen Kopf (30) aufweist, der ausgeformt ist, um am Karosserieelement (2) des Fahrzeugs (1) einzurasten und eine Basis (32), die ausgeformt ist, um in die Einrastöffnung (18) der Cliphalterung (12) einzurasten;
wobei die Vorrichtung (14) zwischen einer Ruheposition, in der die Basis (32) des Clips (24) in der Einrastöffnung (18) der Cliphalterung (12) eingerastet ist, und einer Halteposition bewegt werden kann, in der die Basis (32) des Clips (24) nicht in der Einrastöffnung (18) eingerastet ist, und das Verankerungsglied am Umfang der Einrastöffnung (18) anliegt, um das Verkleidungselement (4) durch die Cliphalterung (12) und die Litze (28) am Karosserieelement (2) zu halten;
**dadurch gekennzeichnet, dass** eine flexible Textillitze (28) der Haltevorrichtung den Clip (24) mit einem Verankerungsglied verbindet;
wobei das Verankerungsglied derart ausgeformt ist, um:
- wenn es in eine erste Richtung ausgerichtet ist, in der Lage zu sein, durch die Einrastöffnung (18) der Cliphalterung (12) geführt zu werden, um die Montage der Vorrichtung (14) in der Ruheposition zu ermöglichen; und
- wenn es in eine zweite Richtung ausgerichtet ist, nicht in der Lage zu sein, durch die Einrastöffnung (18) der Cliphalterung (12) geführt zu werden, damit das Verankerungsglied am Umfang der Einrastöffnung (18) anliegt, und das Verkleidungselement (4) durch die Cliphalterung (12) am Karosserieelement hält;
wobei die Cliphalterung (12) Befestigungsmittel umfasst, die sich dazu eignen, das Verankerungsglied ohne irgendeinen Freiheitsgrad zu fixieren, wenn sich die Haltevorrichtung in der Halteposition befindet, und beim Übergang der Vorrichtung von ihrer Ruheposition in ihre Halteposition die Freigabe des Verankerungsglieds zu ermöglichen.

2. Einheit (10) nach dem vorherigen Anspruch, wobei das Verankerungsglied eine gebogene Form aufweist.

3. Einheit (10) nach Anspruch 2, wobei ein distales Ende dieses Verankerungsglieds zugespitzt ist.

4. Einheit (10) nach einem der Ansprüche 1 bis 3, wobei die Befestigungsmittel eine Aufnahme aufweisen, die derart ausgeformt ist, dass zumindest ein Abschnitt des Verankerungsglieds in der Lage ist, darin einzurasten.

5. Einheit (10) nach irgendeinem der Ansprüche 1 bis 4, wobei die Befestigungsmittel im Inneren eines Innenvolumens angeordnet sind, das von den Wänden (15, 16, 17) der Cliphalterung (12) eingegrenzt wird.

6. Einheit (10) nach irgendeinem der Ansprüche 1 bis 5, wobei die Befestigungsmittel gestaltet sind, um das Verankerungsglied beim Übergang der Haltevorrichtung (14) von ihrer Ruheposition in ihre Halteposition freizugeben.

7. Einheit (10) nach irgendeinem der vorherigen Ansprüche, wobei die Cliphalterung (12) die Form einer Brücke aufweist und das Verankerungsglied aus einem Innenvolumen, das von den Wänden (15, 16, 17) der Cliphalterung (12) eingegrenzt wird, herausversetzt ist, wenn sich die Vorrichtung (14) in der Ruheposition befindet.

8. Einheit (10) nach irgendeinem der vorherigen Ansprüche, wobei der Clip (24) und/ oder das Verankerungsglied aus einem Kunststoffmaterial, wie Polyamid gefertigt sind.

9. Einheit (10) nach irgendeinem der vorherigen Ansprüche, wobei die Litze (28) Fasern aus Polyester umfasst.

10. Einheit (10) nach irgendeinem der vorherigen Ansprüche, wobei der Clip und/ oder das Verankerungsglied auf der Litze angeformt sind.

11. Fahrzeug (1), **dadurch gekennzeichnet, dass** es folgendes umfasst:
- ein Verkleidungselement (4);
- ein Karosserieelement (2); und
- eine Einheit (10) nach irgendeinem der vorherigen Ansprüche.

12. Fahrzeug (1) nach Anspruch 11, wobei das Verkleidungselement (4) und die Cliphalterung (12) einteilig sind.

## Claims

1. An assembly (10) for retaining a lining element (4) to a body element (2) of a vehicle (1) during the deployment of an airbag (8) interposed between the lining (4) and the body (2) elements, the assembly (10) including :
- a clip-holder (12) intended to be connected to the lining element (4), comprising at least one wall (17) provided with a snap-fit orifice (18);
- a retaining device (14) mounted on the clip-holder, comprising:
a clip (24) presenting a head (30) shaped to snap-fit on the body element (2) of the vehicle (1), and a base (32) shaped to snap-fit in the snap-fit orifice (18) of the clip-holder (12);
the device (14) being displaceable between a rest position, in which the base (32) of the clip (24) is snap-fitted on the snap-fit orifice (18) of the clip-holder (12), and a retaining position in which the base (32) of the clip (24) is disengaged from the snap-fit orifice (18) and the anchor member bears against the circumference of the snap-fit orifice (18) so as to retain the lining element (4) to the body element (2) by means of the clip-holder (12) and the cord (28);
**characterized in that** a flexible textile cord (28) of the retaining device connects the clip (24) to an anchor member; the anchor member being shaped so that:
- when oriented in a first direction, it can be introduced through the snap-fit orifice (18) of the clip-holder (12), so as to enable mounting of the device (14) in the rest position; and
- when oriented in a second direction, it cannot pass through the snap-fit orifice (18) of the clip-holder (12), so that the anchor member bears against the circumference of the snap-fit orifice (18) and retains the lining element (4) to the body element by means of the clip-holder (12);
the clip-holder (12) comprising fastening means adapted to fasten the anchor member without any degree of freedom when the retaining device is in the rest position, and to enable release of the anchor member when the device switches from its rest position to its retaining position.

2. The assembly (10) according to the preceding claim, wherein the anchor member presents an arcuate shape.

3. The assembly (10) according to claim 2, wherein a distal end of this anchor member is tapered.

4. The assembly (10) according to any of claims 1 to 3, wherein the fastening means present a housing shaped so that at least a portion of the anchor member can fit therein.

5. The assembly (10) according to any one of claims 1 to 4, wherein the fastening means are disposed inside an internal volume delimited by walls (15, 16, 17) of the clip-holder (12).

6. The assembly (10) according to any one of claims 1 to 5, wherein the fastening means are designed so as to release the anchor member when the retaining device (14) switches from its rest position to its retaining position.

7. The assembly (10) according to any one of the preceding claims, wherein the clip-holder (12) is in the form of a bridge and the anchor member is offset out of an internal volume delimited by walls (15, 16, 17) of the clip-holder (12) when the device (14) is in the rest position.

8. The assembly (10) according to any one of the preceding claims, wherein the clip (24) and/or the anchor member are made of a plastic material such as polyamide.

9. The assembly (10) according to any one of the preceding claims, wherein the cord (28) comprises polyester fibers.

10. The assembly (10) according to any one of the preceding claims, wherein the clip and/or the anchor member are over-molded on the cord.

11. A vehicle (1), **characterized in that** it includes :
- a lining element (4);
- a body element (2); and
- an assembly (10) according to any one of the preceding claims.

12. The vehicle (1) according to claim 11, wherein the lining element (4) and the clip-holder (12) are integral with each other.
